Europäisches Patentamt

European Patent Office

Office européen des brevets

(19)

(11) **EP 0 590 843 B1**

(12) **EUROPEAN PATENT SPECIFICATION**

(45) Date of publication and mention
of the grant of the patent:
**12.05.1999 Bulletin 1999/19**

(51) Int Cl.6: **C09J 131/02**, C09J 133/06,
C09J 133/08

(21) Application number: **93307426.2**

(22) Date of filing: **20.09.1993**

(54) **Laminating adhesive compositions for packaging applications**

Laminierklebstoff-Zusammensetzungen für Verpackungszwecke

Compositions adhésives de laminage utilisable pour l'emballage

(84) Designated Contracting States:
**AT BE CH DE DK ES FR GB GR IE IT LI LU MC NL PT SE**

(30) Priority: **01.10.1992 US 955549**

(43) Date of publication of application:
**06.04.1994 Bulletin 1994/14**

(73) Proprietor: **ROHM AND HAAS COMPANY**
**Philadelphia Pennsylvania 19105 (US)**

(72) Inventors:
 • **Eisenhart, Eric Karl**
  **Doylestown, Pennsylvania 18901 (US)**
 • **van Rheenen, Paul Ralp**
  **Warminster, Pennsylvania 18974 (US)**
 • **Graziano, Louis Christopher**
  **Warrington, Pennsylvania 18976 (US)**
 • **Bricker, Mark Charles**
  **Gilbertsville, Pennsylvania 19525 (US)**
 • **Lin, Long-Jin**
  **Holland, Pennsylvania 18966 (US)**

(74) Representative: **Angell, David Whilton et al**
**ROHM AND HAAS**
**European Operations Patent Department**
**Lennig House**
**2 Mason's Avenue**
**Croydon CR9 3NB (GB)**

(56) References cited:
 **EP-A- 0 017 986**     **EP-A- 0 185 356**
 **EP-A- 0 547 507**     **US-A- 4 617 343**

 • **DATABASE WPI Week 8116, Derwent**
  **Publications Ltd., London, GB; AN 81-27937D &**
  **JP-A-56 018 612 (DENKI KAGAKU) 21 February**
  **1981**

## Description

The present invention relates to laminating adhesive compositions for packaging applications. In particular, the present invention relates to aqueous vinyl ester/acrylic-based laminating adhesive compositions free from organic cosolvent which are adapted to bonding difficult-to-adhere substrates such as for packaging applications.

Major portions of the laminating adhesives industry such as, for example, the packaging adhesives require a laminating adhesive to permanently bond difficult-to-adhere substrates including, for example, plastic films such as, for example, polyethylene, polypropylene, and polyesters; and wax coatings. Present adhesives such as, for example, vinyl acetate/ethylene copolymers require the addition of volatile organic solvents, preferably chlorinated solvents, to obtain adequate adhesion or, alternatively, require the inclusion in the adhesive composition of expensive "soft" polymers, i.e., polymers with a glass transition temperature (Tg) below about-30°C.

Attempts to eliminate volatile organic solvents from aqueous vinyl acetate/ethylene copolymer laminating adhesives have failed because a vinyl acetate/ethylene composition of sufficiently low Tg that volatile organic solvents are not needed requires a high level of ethylene, i.e., above about 30-40 weight % ethylene; such polymer compositions tend to crystallize which has the effect of making the polymer brittle and thereby exhibit poor adhesion performance.

Vinyl acetate homopolymers have also been evaluated as laminating adhesives but it has not been possible to incorporate the levels of volatile organic solvent required to achieve adequate adhesion performance. Further, legislation and concerns regarding the use of volatile organic solvents make this approach undesirable.

US-A-4,694,056 discloses an aqueous pressure sensitive adhesive containing a copolymer of an alkyl acrylate or vinyl ester, or both, an acid functional comonomer, and a polyfunctional copolymerizable monomer. The '056 patent does not disclose a laminating adhesive composition, which is used in a wet state, without cosolvent which exhibits good adhesive performance.

US-A-5,100,944 discloses a water-borne packaging and converting adhesive which contains 10-98 parts dispersion of a vinyl acetate homo-/co-/ter-polymer, 2-30 parts by weight of plasticizer, and 1-20 parts by weight of ethylene glycol diacetate (EGDA) as the sole organic solvent. Also disclosed is the use of the EGDA in place of conventional halogenated solvents such as methyl chloroform to provide adhesive products with reduced environmental and health related problems. The '944 patent does not disclose a laminating adhesive composition without cosolvent which exhibits good adhesive performance.

The present invention seeks to overcome the problems associated with the prior art.

According to a first aspect of the present invention there is provided a method of laminating two substrates comprising

(a) forming an aqueous, organic solvent-free laminating adhesive composition comprising a vinyl ester/acrylic copolymer having a glass transition temperature from 10°C to -45°C;
(b) applying said composition to a first substrate;
(c) contacting said applied composition with a second substrate; and,
(d) after (c), drying said composition,

wherein said first substrate and/or second substrate is a difficult-to-adhere substrate selected from the group consisting of plastic films and wax coatings.

Preferably said glass transition temperature is from 10°C to -45°, more preferably 15 °C. to -35 °C..

Preferably said copolymer comprises a copolymerized acrylic monomer selected from the group consisting of n-butyl acrylate and 2-ethylhexyl acrylate, vinyl acetate and n-butyl acrylate, and 2-ethylhexyl acrylate and vinyl acetate.

Preferably said copolymer further comprises a stabilizer selected from the group consisting of hydroxyethyl cellulose and polyvinyl alcohol.

Preferably said copolymer is prepared with from 0.05% to about 0.75% of a chain transfer agent.

Preferably said chain transfer agent is selected from the group consisting of n-dodecyl mercaptan and methyl mercaptopropionate.

Preferably the laminating adhesive composition further comprises at least 5% clay by weight, based on the weight of said copolymer.

Preferably the laminating adhesive composition further comprises an aqueous tackifier.

The present invention therefore provides an aqueous vinyl ester/acrylic-based laminating adhesive compositions adapted to bond difficult-to-adhere substrates, which compositions are free from organic cosolvent. A method for laminating difficult-to-adhere substrates is also provided.

The advantages of the present invention are that the aqueous laminating adhesive compositions incorporating vinyl ester/acrylic copolymers with a selected Tg from about 10 °C. to about -45 °C., preferably from about-15 °C. to about -35 °C. exhibit good adhesion performance with difficult-to-adhere substates without requiring any cosolvent.

This invention is therefore directed to aqueous laminating adhesive compositions adapted to bond difficult-to-adhere substrates, the compositions incorporating vinyl ester/acrylic copolymers with a Tg from about 10 °C. to about -45 °C., preferably from about -15 °C. to about -35 °C., which compositions exhibit good adhesion performance without requiring organic solvent. Glass transition temperatures (Tgs) herein are those calculated as a weighted average of the homopolymer Tg values, that is, for calculating the Tg of a copolymer of monomers M1 and M2,

$$Tg(calc.)= w(M1) \times Tg(M1) + w(M2) \times Tg(M2),$$

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2

The glass transition temperature of homopolymers may be found, for example, in "Polymer Handbook", edited by J. Brandrup and E.H. Immergut, Interscience Publishers.

The aqueous vinyl ester/acrylic copolymers of the composition of this invention contain at least one copolymerized vinyl ester. Vinyl esters are ethylenically unsaturated ester monomers which include monomers such as, for example, vinyl acetate, vinyl propionate, and vinyl versatate. Vinyl acetate is preferred.

The aqueous vinyl ester/acrylic copolymers of the composition of this invention contain at least one copolymerized acrylic monomer. Acrylic monomers herein include esters of (meth)acrylic acid, esters of crotonic acid, amides of (meth)acrylic acid, nitriles of (meth)acrylic acid, and the like.

Acrylic ester monomers such as, for example, methyl acrylate, ethyl acrylate, butyl acrylate, 2-ethylhexyl acrylate, decyl acrylate, methyl methacrylate, ethyl methacrylate, butyl methacrylate, and lauryl methacrylate may be used, subject to the Tg restrictions on the copolymer as stated herein.

Acrylic ester monomers are preferred as a result of their low Tgs and the ease of polymerization with vinyl ester monomers. Butyl acrylate and 2-ethylhexyl acrylate are more preferred.

The aqueous copolymers of the composition of this invention may contain a copolymerized polar monomer such as, for example, a monomer containing a hydroxyl group such as, for example, hydroxyethyl acrylate and hydroxypropyl methacrylate; and a monomer containing a carboxylic acid group such as, for example, acrylic acid, methacrylic acid, itaconic acid, crotonic acid and fumaric acid; from 0% to about 10% by weight, based on the weight of the copolymer.

Acrylic acid from about 0.2 to about 2% by weight, based on the weight of the copolymer is preferred.

When low levels of precrosslinking or gel content are desired, low levels of multi-ethylenically unsaturated monomers such as, for example, allyl (meth)acrylate, diallyl phthalate, 1,4-butylene glycol di(meth)acrylate, 1,6-hexanediol di(meth)acrylate, and the like, may be used from about 0.01% to about 5 %, by weight based on the weight of the copolymer.

The aqueous vinyl ester/acrylic copolymers of this invention may be prepared by various addition polymerization techniques. Emulsion polymerization is preferred. The vinyl ester/acrylic emulsion copolymers may be be prepared by techniques for polymerizing ethylenically-unsaturated monomers which are well known in the art. Colloidal stabilization, anionic or nonionic surfactant stabilization, or mixtures thereof, may be used. Stabilization by a colloidal stabilizer such as, for example, hydroxyethyl cellulose, N-vinyl pyrollidone, polyvinyl alcohol, partially acetylated polyvinyl alcohol, carboxymethyl cellulose, and gum arabic is preferred. More preferred is stabilization by polyvinyl alcohol from about 0.05% to about 10% by weight, based on the weight of the emulsion copolymer. The polymerization reaction may be initiated by various methods known in the art such as, for example, by using the thermal decomposition of an initiator and by using an oxidation-reduction reaction to generate free radicals to effect the polymerization.

Chain transfer agents including mercaptans, polymercaptans, and halogen compounds may be used in the polymerization mixture in order to moderate the molecular weight of the vinyl ester/acrylic emulsion copolymer. Generally, from 0% to about 1% by weight, based on the weight of the polymeric binder, of $C_2$ - $C_{20}$ alkyl mercaptans, 3-mercaptopropionic acid, or esters of 3-mercaptopropionic acid, may be used.

Preferred is from 0.05% to about 0.75% by weight, based on the weight of the polymeric binder, of dodecyl mercaptan or methyl 3-mercaptopropionate.

The particles of the vinyl ester/acrylic emulsion copolymer are from about 100 nanometers to about 4000 nanometers in diameter, as measured using a Brookhaven BI-90 Particle Sizer, which employs a light scattering technique. Further, broad particle size distributions and polymodal particle size distributions such as those disclosed in US-A-4,384,056 and US-A-4,539,361 may be employed.

The solids content of the vinyl ester/acrylic emulsion copolymer may be from about 30% to about 70% by weight. Preferred is a solids content from about 45 to about 60% by weight.

The viscosity of the vinyl ester/acrylic emulsion copolymer may be from about 200 mNsm$^{-2}$ (cps.) to about 12,000 mNsm$^{-2}$ (cps.), as measured by a Brookfield viscometer (Model LVT using spindle #3 at 12 rpm.). Preferred is a viscosity from about 1000 mNsm$^{-2}$ (cps.) to about 5000 mNsm$^{-2}$ (cps.).

The aqueous laminating adhesive composition is free from organic solvent. "Organic solvent-free" as used herein means that the adhesive composition does not contain "volatile organic compounds" defined herein as having a boiling point at atmospheric pressure of less than about 240°C., as may materially contribute to pollution, toxicity and/or volatile organic content of the adhesive compositions. "Organic solvent-free" composition is not to be taken as excluding compositions which contain very low levels of deliberately or adventitiously added volatile organic compounds such as, for example, solvents incorporated in certain commercial initiator or surfactant compositions and volatile organic compound impurities; in any event the level of volatile organic compounds is less than about 1% by weight, based on the dry weight of the vinyl ester/acrylic copolymer.

The aqueous laminating adhesive composition may contain, in addition to the vinyl ester/acrylic emulsion copolymer, conventional treatment components such as, for example, emulsifiers, pigments, fillers, anti-migration aids, curing agents, thickeners, humectants, wetting agents, biocides, plasticizers, organosilanes, anti-foaming agents, colorants, waxes, and anti-oxidants.

The aqueous laminating adhesive composition may be applied to a substrate by conventional techniques such as, for example, roll coating, wire wound rod coating, knife coating, gravure printing, curtain coating, or the like.

The aqueous laminating adhesive composition, after it is applied to a substrate, may optionally be heated to effect drying and, optionally, curing. The duration and temperature of heating will affect the rate of drying, processability and handleability, and property development of the treated substrate. Heat treatment from about 25°C. to about 250°C. for a period of time between about 3 seconds to about 15 minutes may be carried out.

The aqueous laminating adhesive composition may be used for applications such as, for example, packaging adhesives to permanently bond difficult-to-adhere substrates including, for example, plastic films such as, for example, polyethylene, polypropylene, polyvinyl chloride, and polyesters; and wax coatings; to themselves, to one another, or to other substrates such as, for example, paper and paperboard.

The present invention will now be described only by way of examples.

In the following Examples, the following abreviations are used:

pli = x 5.6 kg/cm (equivalent to x 1 pound per linear inch - based on the calculation that 1 lb/in is equivalent to 0.18 kg/cm);
CTA = chain transfer agent;
°C. = degrees Centigrade;
FT = fiber tear;
OPP = oriented polypropylene;
RH = relative humidity;
PET = polyethylene terephthalate;
DI = deionized;
(meth)acrylate = acrylate or methacrylate;
gli = x 2.6 g/cm (equivalent to x 1 gram per linear inch - based on the calculation that 1 g/in is equivalent to 0.39 g/cm);
MMP = methyl 3-mercaptopropionate; and
nDDM = n-dodecyl mercaptan.

EXAMPLE 1. Preparation of vinyl ester/acrylic copolymer

Preparation of Sample 1. A stirred reactor containing 3,950 g. of deionized (D.I.) water was heated to 65 °C under nitrogen. Then 2 g of a 1 wt.% solution of iron (II) sulfate in water was added, followed by 50g of a monomer mixture consisting of: 2200 g of DI water, 2000 g of a 20% solution of partially hydrolyzed polyvinyl alcohol (Airvol-205) in water, 280 g of a 70 wt% solution of a nonylphenol 16 mole ethoxylate in water, 6000 g of vinyl acetate, 2080 g of n-butyl acrylate, 120 g of acrylic acid, and 13.8 g of diallyl phthalate. Then a mixture of 7.5 g of 30 wt% hydrogen peroxide (in water) dissolved in 50 g of DI water was added. The remaining portion of the monomer mixture was fed according to the following schedule: 45 g/min for 15 min, then 65 g/min for the next 15 min, and then finish the feed at 87 g/min.

Total feed time was approximately 3 hours. At the same time as the monomer mixture feed, the following two solutions were added: 22.5 g of 30 wt% hydrogen peroxide (in water) dissolved in 150 g of DI water and 10.5 g of sodium sulphoxylate formaldehyde dissolved in 170 g of DI water, according to the following schedule: 1.1 g/min for 15 min, 0.75 g/min for the remainder of the monomer mixture feed, and 1.5 g/min after the completion of the monomer mixture feed. When 3,940 g of the monomer mixture remained, the following was added to it: 280 g of DI water, 770 g of butyl acrylate, 30 g of acrylic acid, and 1.2 g diallyl phthalate. At the completion of the monomer mixture feed an additional 200 g of DI water was added to the reaction. At the completion of the hydrogen peroxide and sodium sulphoxylate formaldehyde feeds the reaction was cooled and adjusted to pH 4.5 with a 10 wt% solution of sodium carbonate in water. The final product had a solids content of 53.7%, Brookfield viscosity (#3 spindle at 12 rpm) of 1,100 mNsm$^{-2}$ (cps.), and Tg(calc.)= 6 °C.

EXAMPLE 2. Preparation of vinyl ester/acrylic copolymer

Preparation of Sample 2. A stirred reactor containing 665 g. of deionized (D.I.) water was heated to 65 °C under nitrogen. Then 2 g of a 0.1 wt.% solution of iron (II) sulfate in water was added, followed by a solution of 1.5 g of 30 wt% hydrogen peroxide (in water) dissolved in 10 g of DI water. A feed of a monomer mixture consisting of: 520 g of DI water, 400 g of a 20% solution of partially hydrolyzed polyvinyl alcohol (Airvol-205) in water, 71 g of a 70 wt% solution of a nonylphenol 16 mole ethoxylate in water, 1000 g of vinyl acetate, 970 g of n-butyl acrylate, and 30 g of acrylic acid, was started. The monomer mixture was fed according to the following schedule: 5 g/min for 15 min, then 10 g/min for the next 15 min, 15 g/min for 15 min, and then the feed was finished at 20 g/min. Total feed time was approximately 3 hours.

At the same time as the monomer mixture feed, the following two solutions were cofed: 4.5 g of 30 wt% hydrogen peroxide (in water) dissolved in 42 g of DI water and 2.1 g of sodium sulphoxylate formaldehyde dissolved in 46 g of DI water, according to the following schedule: 0.2 g/min for 15 min, 0.25 g/min for 15 min, 0.3 g/min for 15 min, 0.25 g/min for 15 min, and then 0.2 g/min for the remainder of the solutions. At the completion of the monomer mixture feed an additional 45 g of DI water was added to the reaction. At the completion of the hydrogen peroxide and sodium sulphoxylate formaldehyde feeds the reaction was cooled and adjusted to pH 4.5 with a 15 wt.% solution of sodium carbonate in water. Sample 2 had a solids content of 53.7%, and Tg(calc.)= -8.6 °C.

EXAMPLE 3. Preparation of vinyl ester/acrylic copolymer

Preparation of Sample 3. Sample 3 was prepared according to the process of Example 2 using the following monomer mixture: 520 g of DI water, 400 g of a 20% solution of partially hydrolyzed polyvinyl alcohol (Airvol-205) in water, 71 g of a 70 wt% solution of a nonylphenol 16 mole ethoxylate in water, 700 g of vinyl acetate, 1270 g of n-butyl acrylate, and 30 g of acrylic acid. Sample 3 had a solids content of 55.3%, Brookfield viscosity (#3 spindle at 12 rpm) of 3,100 mNsm$^{-2}$ (cps.), and Tg(calc.)= -21.5 °C.

EXAMPLE 4. Preparation of vinyl ester/acrylic copolymer

Preparation of Sample 4. Sample 4 was prepared according to the process of Example 2 using the following monomer mixture: 520 g of DI water, 400 g of a 20% solution of partially hydrolyzed polyvinyl alcohol (Airvol-205) in water, 71 g of a 70 wt% solution of a nonylphenol 16 mole ethoxylate in water, 400 g of vinyl acetate, 1570 g of n-butyl acrylate, and 30 g of acrylic acid. Sample 4 had a solids content of 53.5%, Brookfield viscosity (#3 spindle at 12 rpm) of 5,900 mNsm$^{-2}$ (cps.), and Tg(calc.)= -34.4 °C.

EXAMPLE 5. Preparation of vinyl ester/acrylic copolymer

Preparation of Sample 5. Sample 5 was prepared according to the process of Example 2 using the following monomer mixture: 520 g of DI water, 400 g of a partially hydrolyzed polyvinyl alcohol (Airvol-205) in water, 71 g of a 70 wt% solution of a nonylphenol 16 mole ethoxylate in water, 500 g of vinyl acetate, 1480 g of n-butyl acrylate, and 20 g of acrylic acid. The cofed hydrogen peroxide solution was 3.0 g of 30 wt% hydrogen peroxide (in water) dissolved in 42 g of DI water. Sample 5 had a solids content of 54.6%, a Brookfield viscosity (#3 spindle at 12 rpm) of 4,300 mNsm$^{-2}$ (cps.), and Tg(calc)= -30.9 °C.

EXAMPLE 6. Preparation of vinyl ester/acrylic copolymer

Preparation of Sample 6. A stirred reactor containing 500 g. of deionized (D.I.) water was heated to 65 °C under nitrogen. Then 2 g of a 0.1 wt.% solution of iron (II) sulfate in water was added, followed by a solution of 0.5 g of 30 wt% hydrogen peroxide (in water) dissolved in 10 g of DI water. A feed of a monomer mixture consisting of: 590 g of DI water, 300 g of a 20% solution of partially hydrolyzed polyvinyl alcohol (Airvol-205) in water, 30 g of a nonylphenol 10 mole ethoxylate, 500 g of vinyl acetate, 1480 g of n-butyl acrylate, and 20 g of acrylic acid, was started. The monomer mixture was fed according to the following schedule: 5 g/min for 15 min, then 10 g/min for the next 15 min, 15 g/min for 15 min, and then the feed was finished at 20 g/min. Total feed time was approximately 165 min. At the same time as the monomer mixture feed, the following two solutions were cofed: 4.0 g of 30 wt% hydrogen peroxide (in water) dissolved in 43 g of DI water and 2.1 g of sodium sulphoxylate formaldehyde dissolved in 46 g of DI water, according to the following schedule: 0.2 g/min for 15 min, 0.25 g/min for 15 min, 0.3 g/min for 15 min, 0.25 g/min for 15 min, then 0.2 g/min until 15 min after the completion of the monomer mixture feed, and then 0.5 g/min for the remainder of the solutions.

At the completion of the monomer mixture feed an additional 45 g of DI water was added to the reaction. At the completion of the hydrogen peroxide and sodium sulphoxylate formaldehyde feeds the reaction was cooled and adjusted to pH 4.5 with a 15 wt% solution of sodium carbonate in water.

Sample 6 had a solids content of 55.3%, Brookfield viscosity (#3 spindle at 12 rpm) of 2,600 mNsm$^{-2}$ (cps.), and Tg(calc.)= -30.9 °C.

EXAMPLE 7. Preparation of vinyl ester/acrylic copolymer

Preparation of Sample 7. A stirred reactor containing 500 g. of deionized (D.I.) water was heated to 65 °C under nitrogen. Then 2 g of a 0.1 wt.% solution of iron (II) sulfate in water was added, followed by a solution of 0.3 g of 30 wt% hydrogen peroxide (in water) dissolved in 10 g of DI water. A feed of a monomer mixture consisting of: 590 g of DI water, 300 g of a 20% solution of partially hydrolyzed polyvinyl alcohol (Airvol-205) in water, 30 g of a nonylphenol 10 mole ethoxylate, 500 g of vinyl acetate, 1480 g of n-butyl acrylate, and 20 g of crotonic acid, was started. The monomer mixture was fed according to the following schedule: 5 g/min for 15 min, then 10 g/min for the next 15 min, 15 g/min for 15 min, and then the feed was finnished at 20 g/min. Total feed time was approximately 3 hours. At the same time as the monomer mixture feed, the following two solutions were cofed: 2.4 g of 30 wt% hydrogen peroxide (in water) dissolved in 44 g of DI water and 1.26 g of sodium sulphoxylate formaldehyde dissolved in 46.5 g of DI water, according to the following schedule: 0.2 g/min for 15 min, 0.25 g/min for 15 min, 0.3 g/min for 15 min, 0.25 g/min for 15 min, then 0.2 g/min for the remainder of the solutions. At the completion of the monomer mixture feed an additional 45 g of DI water was added to the reaction.

At the completion of the hydrogen peroxide and sodium sulphoxylate formaldehyde feeds the reaction was cooled and adjusted to pH 4.5 with a 15 wt.% solution of sodium carbonate in water. Sample 7 had a solids content of 55.3%, Brookfield viscosity (#3 spindle at 12 rpm) of 500 mNsm$^{-2}$ (cps.)s, and Tg(calc.)= -30.9°C.

EXAMPLE 8. Preparation of vinyl ester/acrylic copolymer

Preparation of Sample 8. A stirred reactor containing 3,020 g. of deionized (D.I.) water and 150 g of a nonylphenol 10 mole ethoxylate of was heated to 66 °C under nitrogen. Then 5.1 g of a 0.6 wt.% solution of iron (II) sulfate in water was added, followed by a solution of 2.5 g of 30 wt.% hydrogen peroxide (in water) dissolved in 15 g of DI water. A feed of a monomer mixture consisting of: 2602 g of DI water, 10 g of sodium acetate, 1660 g of a 21% solution of partially hydrolyzed polyvinyl alcohol (Airvol-205) in water, 2500 g of vinyl acetate, 7400 g of n-butyl acrylate, and 100 g of acrylic acid, was started. The monomer mixture was fed at 86 g/min for 165 min. At the same time as the monomer mixture feed, the following two solutions were cofed: 20.0 g of 30 wt% hydrogen peroxide (in water) dissolved in 311 g of DI water and 11.4 g of sodium sulphoxylate formaldehyde dissolved in 320 g of DI water, at 1.7 g/min for 190 min. At the completion of the monomer mixture feed an additional 45 g of DI water was added to the reaction. At the completion of the hydrogen peroxide and sodium sulphoxylate formaldehyde feeds the reaction was cooled and adjusted to pH 4.5 with a 10 wt.% solution of sodium carbonate in water. Sample 8 had a solids content of 54.8%, Brookfield viscosity (#3 spindle at 12 rpm) of 1,560 mNsm$^{-2}$ (cps.), and Tg(calc.)= -30.9 °C.

EXAMPLE 9. Preparation of vinyl ester/acrylic copolymer

Preparation of Sample 9. A stirred reactor containing 575 g. of deionized (D.I.) water and 30 g of a nonylphenol 10 mole ethoxylate was heated to 65 °C under nitrogen. Then 2 g of a 0.1 wt.% solution of iron (II) sulfate in water was added, followed by a solution of 0.5 g of 30 wt% hydrogen peroxide (in water) dissolved in 5 g of DI water. A feed of a monomer mixture consisting of: 560 g of DI water, 300 g of a 20% solution of partially hydrolyzed polyvinyl alcohol (Airvol-205) in water, 900 g of vinyl acetate, 1080 g of 2-ethylhexyl acrylate, and 20 g of acrylic acid, was started. The monomer mixture was fed at 17.5 g/min for 165 min. At the same time as the monomer mixture feed, the following two solutions were cofed: 4.0 g of 30 wt% hydrogen peroxide (in water) dissolved in 62 g of DI water and 2.1 g of sodium sulphoxylate formaldehyde dissolved in 65 g of DI water, at 0.32 g/min for 180 min. At the completion of the monomer mixture feed an additional 30 g of DI water was added to the reaction. At the completion of the hydrogen peroxide and sodium sulphoxylate formaldehyde feeds the reaction was cooled and adjusted to pH 4.5 with a 15 wt% solution of sodium carbonate in water. Sample 9 had a solids content of 53.6%, Brookfield viscosity (#3 spindle at 12 rpm) of 500 $mNsm^{-2}$ (cps.), and Tg(calc.)= -30.4 °C.

EXAMPLE 10. Preparation of vinyl ester/acrylic copolymer

Preparation of Sample 10. Sample 10 was prepared according to the method of Example 9 using the following monomer mixture: 560 g of DI water, 300 g of a 20% solution of partially hydrolyzed polyvinyl alcohol (Airvol-205) in water, 700 g of vinyl acetate, 1280 g of 2-ethylhexyl acrylate, and 20 g of acrylic acid. Sample 10 had a solids content of 54.5%, Brookfield viscosity (#4 spindle at 12 rpm) of 16,000 $mNsm^{-2}$ (cps.), and Tg(calc.)= -42 °C.

EXAMPLE 11. Preparation of vinyl ester/acrylic copolymer

Preparation of Sample 11. Sample 11 was prepared according to the method of Example 9 using the following monomer mixture: 560 g of DI water, 300 g of partially hydrolyzed polyvinyl alcohol (Airvol-205) in water, 800 g of vinyl acetate, 1180 g of 2-ethylhexyl acrylate, and 20 g of acrylic acid. Sample 11 had a solids content of 54.7%, Brookfield viscosity (#3 spindle at 12 rpm) of 650 $mNsm^{-2}$ (cps.), and Tg(calc.)= -36.3 °C.

EXAMPLE 12. Preparation of vinyl ester/acrylic copolymer

Preparation of Sample 12. A stirred reactor containing 211 g. of deionized (D.I.) water and 12 g of a nonylphenol 10 mole ethoxylate was heated to 65 °C under nitrogen. Then 0.8 g of a 0.1 wt.% solution of iron (II) sulfate in water was added, followed by a solution of 0.2 g of 30 wt% hydrogen peroxide (in water) dissolved in 2 g of DI water. A feed of a monomer mixture consisting of: 211 g of DI water, 122 g of a 19.6% solution of partially hydrolyzed polyvinyl alcohol (Airvol-205) in water, 200 g of vinyl acetate, 592 g of n-butyl acrylate, 8 g of acrylic acid, and 0.8 g of n-dodecyl mercaptan, was started. The monomer mixture was fed at 6.9 g/min for 165 min. At the same time as the monomer mixture feed, the following two solutions were cofed: 1.6 g of 30 wt% hydrogen peroxide (in water) dissolved in 39.8 g of DI water and 0.8 g of sodium sulphoxylate formaldehyde dissolved in 41 g of DI water, at 0.2 g/min for 180 min. At the completion of the monomer mixture feed an additional 12 g of DI water was added to the reaction. At the completion of the hydrogen peroxide and sodium sulphoxylate formaldehyde feeds the reaction was cooled and adjusted to pH 4.5 with a 15 wt% solution of sodium carbonate in water. Sample 12 had a solids content of 54.5% (#3 spindle at 12 rpm) of 1,850 $mNsm^{-2}$ (cps.), and Tg(calc.)= -30.9 °C.

EXAMPLE 13 Preparation of vinyl ester/acrylic copolymer

Preparation of Sample 13. Sample 13 was prepared according to the method of Example 12 using the following monomer mixture: 211 g of DI water, 122 g of a 19.6% solution of partially hydrolyzed polyvinyl alcohol (Airvol-205) in water, 200 g of vinyl acetate, 592 g of n-butyl acrylate, 8 g of acrylic acid, and 4 g of n-dodecyl mercaptan. Sample 13 had a solids content of 54.4%, Brookfield viscosity (#3 spindle at 12 rpm) of 2,000 $mNsm^{-2}$ (cps.), and Tg(calc.)= -30.9 °C.

EXAMPLE 14. Preparation of vinyl ester/acrylic copolymer

Preparation of Sample 14. Sample 14 was prepared according to the method of Example 12 using the following monomer mixture: 211 g of DI water, 122 g of a 19.6% solution of partially hydrolyzed polyvinyl alcohol (Airvol-205) in water, 200 g of vinyl acetate, 592 g of n-butyl acrylate, 8 g of acrylic acid, 0.8 g of methyl 3-mercaptopropionate.
Sample 14 had a solids content of 54.6%, Brookfield viscosity (#3 spindle at 12 rpm) of 1,500 $mNsm^{-2}$ (cps.), and Tg(Calc.)= -30.9 °C.

EXAMPLE 15. Preparation of vinyl ester/acrylic copolymer

Preparation of Sample 15. Sample 15 was prepared according to the method of Example 12 using the following monomer mixture: 211 g of DI water, 122 g of a 19.6% solution of partially hydrolyzed polyvinyl alcohol (Airvol-205) in water, 200 g of vinyl acetate, 592 g of n-butyl acrylate, 8 g of acrylic acid, and 4 g of methyl 3-mercaptopropionate. Sample 15 had a solids content of 54.5%, Brookfield viscosity (#3 spindle at 12 rpm) of 1,700 $mNsm^{-2}$ (cps.), and Tg(calc.)= -30.9 °C.

EXAMPLE 16. Preparation of vinyl ester/acrylic copolymer

Preparation of Sample 16. A stirred reactor containing 3,950 g. of deionized (DI) water was heated to 65 °C. Then 2 g of a 0.1 wt.% solution of iron (II) sulfate in water was added, followed by a solution of 0.5 g of 30 wt% hydrogen peroxide (in water) dissolved in 5 g of DI water. A feed of a monomer mixture consisting of: 400 g of DI water, 500 g of a 20% solution of partially hydrolyzed polyvinyl alcohol (Airvol 205) in water, 30 g of TRITON X-100, 1200 g of vinyl acetate, 780 g of n-butyl acrylate, and 20 g of acrylic acid, was started. The monomer mixture was fed according to the following schedule: 5 g/min for 15 min, then 10 g/min for the next 15 min, 15 g/min for 15 min, and then finished at 20 g/min. Total feed time was approximately 3 hours.

At the same time as the monomer mixture feed, the following two solutions were cofed: 4.0 g of 30 wt% hydrogen peroxide (in water) dissolved in 43 g of DI water and 2.1 g of sodium sulphoxylate formaldehyde dissolved in 46 g of DI water, according to the following schedule: 0.2 g/min for 15 min, 0.25 g/min for 15 min, 0.3 g/min for 15 min, 0.25 g/min for 15 min, and then 0.2 g/min for the remainder of the solutions. At the completion of the monomer mixture feed an additional 45 g of DI water was added to the reaction.

At the completion of the hydrogen peroxide and sodium sulphoxylate formaldehyde feeds the reaction was cooled and adjusted to pH 4.5 with a 15 wt% solution of sodium carbonate in water.

Sample 16 had a solids content of 55.7% and a Tg(calc.)= -1°C.

EXAMPLE 17. Preparation of vinyl ester/acrylic copolymer

Preparation of Sample 17. A stirred reactor containing 2,950 g. of deionized (DI) water was heated to 65 °C under nitrogen. Then 1 g of a 1 wt.% solution of iron (II) sulfate in water was added, followed by a solution of 2.5 g of 30 wt% hydrogen peroxide (in water) dissolved in 15 g of DI water. A feed of a monomer mixture consisting of: 2,800 g of DI water, 1,500 g of a 20% solution of partially hydrolyzed polyvinyl alcohol (Airvol-205) in water, 150 g of TRITON X-100, 2,500 g of vinyl acetate, 7,400 g of n-butyl acrylate, and 100 g of acrylic acid, was started. The monomer mixture was fed according to the following schedule: 25 g/min for 15 min, then 50 g/min for the next 15 min, 75 g/min for 15 min, and then finished at 100 g/min. Total feed time was approximately 3 hours. At the same time as the monomer mixture feed, the following two solutions were cofed: 20.0 g of 30 wt% hydrogen peroxide (in water) dissolved in 143 g of DI water and 10.5 g of sodium sulphoxylate formaldehyde dissolved in 155 g of DI water, according to the following schedule: 0.7 g/min for 15 min, 0.88 g/min for 15 min, 1.05 g/min for 30 min, 0.88 g/min for 15 min, 0.7 g/min until 15 min after the completion of the monomer mixture feed, and then 1 g/min for the remainder of the solutions. At the completion of the monomer mixture feed an additional 225 g of DI water was added to the reaction. At the completion of the hydrogen peroxide and sodium sulphoxylate formaldehyde feeds the reaction was cooled and adjusted to pH 4.5 with a 15 wt% solution of sodium carbonate in water. Sample 17 had a solids content of 55.2%, a Brookfield viscosity (#3 spindle at 12 rpm) of 7,000 mNsm$^{-2}$ (cps.)., and a Tg(calc.)= -30.9 °C.

EXAMPLE 18. Preparation of Adhesive Composition

The adhesive compositions used were the vinyl ester/acrylic copolymers of this invention or comparative polymers in the form of the neat copolymer in all cases.

EXAMPLE 19. Evaluation of adhesive performance

Adhesives, Samples 1-5 and Comparative sample A, were evaluated for adhesion to low energy surfaces - polypropylene and wax-coated surfaces.

Adhesion to wax-coated surface. Michelman Coating 40E wax coating was applied to cardboard with a rubber squeegee (2 passes). The coated board was cured at 105 °C for 1 minute. The board was cut into 5.1 cm by 10.2 cm (2 inch by 4 inch) coupons. A thin coat of adhesive was applied to the coated board with a paint brush. The coated coupon was married to a coupon of virgin board and a 1kg weight was applied for 4 minutes. Three coupons were peeled at 15 second intervals and percent fiber tear was determined visually. After 24 hours the fourth coupon was peeled and percent fiber tear was determined visually.

Adhesion to wax-coated surface. Michelman Coating X300 wax coating was applied to cardboard with a rubber squeegee (2 passes). The coated board was cured at 105 °C for 1 minute. The board was cut into 5.1 cm by 10.2 cm (2 inch by 4 inch) coupons. A thin coat of adhesive was applied to the coated board with a paint brush. The coated coupon was married to a coupon of 45.4 kg (100 lb.) untreated Kraft liner and a 1kg weight was applied for 4 minutes. The sample was dried overnight and samples were peeled using an Instron tester at a rate of 25.4 cm/minute (10 inches/minute) at an angle of 180 degrees.

Polypropylene Adhesion. Adhesives were applied to polypropylene film (Hercules B 503; 50 gauge) with a Gardiner knife to yield 0.002 dry cm (0.8 dry mils) of adhesive. Greaseproof paper (Federal Base Stock from International Paper) was married to the adhesive-bearing surface and roll-laminated with a 1.1 kg (2.5 lb.) rubber roller. The laminate was dried overnight and bond strength was measured on 2.54 cm (1 inch) wide strips on the Instron tester at a rate of 25.4 cm/minute (10 inches/minute) in a T-peel configuration.

Table 19.1

| Adhesion to wax-coated substrate (Michelman Coating 40E) | | |
|---|---|---|
| (% Fiber Tear) | | |
| Sample | 4 minute dwell | 24 hr dwell |
| 1 | 35 | 95 |
| 2 | 35 | 30 |
| 3 | 40 | 100 |
| 5 | 80 | 80 |
| Comparative A | 30 | 30 |

Table 19.2

| Adhesion to wax coated substrate (Michelman Coating X300) | | | |
|---|---|---|---|
| | (180 degree Peel-p.l.i.) | | |
| Sample | neat | with 1.5%GR5M[1] | with 3% GR5M |
| 2 | 0.5 | 1.6 | 2.0 |
| 4 | 1.1 | 2.1 | 2.4 |
| Comparative A | 0.3 | 0.9 | 1.2 |

[1] ACRYSOL GR-5M polyacid thickener

Table 19.3

| Adhesion to Polypropylene (Hercules B 503) | |
|---|---|
| Sample | Adhesion to OPP(pli) |
| 2 | 0.4 |
| 5 | 0.85 |
| Comparative A | 0.1 |

Samples 1-5 of this invention exhibit superior adhesion to substrates to which it is difficult to adhere such as, for example, wax-coated surfaces and polypropylene. Comparative A is a commercial copolymer (Tg=0 °C.) which is substantially composed of vinyl acetate/ethylene.

EXAMPLE 20. Evaluation of adhesion to metal and water resistance.of PVOH-stabilized vinyl ester/acrylic copolymers

One inch wide strips of 80 square cotton were immersed in the adhesive for 10 seconds. As the cotton was removed excess adhesive was doctored from the cotton using glass stirring rods. The strips were wet laminated to the substrate under study, covered with untreated PE and rolled with a 0.9 kg (2 lb.) rubber roller (2 passes). Samples were conditioned as follows:

Dry Conditioning-samples were dried in a (24°C (75 F)/50% RH) room for 7 days. Wet Conditioning-samples were dried in a (24°C (75 F)/50% RH) room for 6 days, then immersed in DI water for 24 hrs. Peel strength was measured immediately after removal from the water.

All samples were tested on an Instron Tensile Tester at a rate of 25.4 cm/minute (10 inches/minute) at an angle of 180 degrees.

Table 20.1

| Adhesion to metal and metallized film substrates | | |
|---|---|---|
| Bond(g.l.i.) after dry conditioning | | |
| Sample | Comparative A. | Sample 16 Sample 17 |
| Aluminum Foil | 1030 | substrate destruct |
| Metallized PET | - | 1136 | 6688 |
| Metallized OPP | - | 1024 | 480 |

| Bond(g.l.i.) after wet conditioning | | | |
|---|---|---|---|
| | Comparative A | Sample 16 | Sample 17 |
| Auminum Foil | 0 | 0 | 64 |
| Metallized PET | not tested | 0 | 32 |
| Metallized OPP | not tested | 128 | 512 |

Adhesion to metal surfaces and metallized films for Sample 17 of this invention is superior to that of Comparative sample A.

EXAMPLE 21. Evaluation of compatibility of PVOH-stabilized vinyl ester/acrylic copolymers with low molecular weight alcohols and solvent esters.

Ten grams of the solvent is added, all in one shot, to 100 grams of Sample 8, while stirring. The emulsion is then inspected for the presence of ropes of gel. Lack of compatibility is defined as the formation of gelled 'ropes' that appear in the emulsion after the solvent addition.

Table 21.1

| Compatibility of copolymers with low molecular weight alcohols and solvent esters. | | |
|---|---|---|
| Polymer | Sample 8 | Comparative A |
| Methanol | OK | ropes |
| Ethanol | OK | ropes |
| PM Acetate | OK | ropes |

Sample 8 of this invention exhibits superior compatibility with low molecular weight alcohols and solvent esters, the incorporation of which results in increased setting speed. These alcohols and solvent esters may be used in sitations where substantially no volatile organic content is not a requirement. Comparative A is a commercial copolymer (Tg= 0 °C.) which is substantially composed of vinyl acetate/ethylene.

EXAMPLE 22. Evaluation of effect of tackifier on adhesion performance of PVOH-stabilized vinyl ester/acrylic copolymers

Copolymer emulsions, to which 25% tackifier (Aquatack 6025), by weight based on the dry weight of copolymer, had been addded, were coated onto polypropylene film with a #8 wire wound rod, then closed to paper and rolled with a 1.13 kg (2.5 lb.) rubber roller. Initial peels were measured after 30 minutes using an Instron Tensile Tester at a rate of 25.4 cm/minute (10 inches/minute).

Typically, tackifiers are not used with vinyl acetate/ethylene compositions due to incompatibility of the two. To achieve the beneficial effects of a tackifier there must be a degree of compatibility between the base resin and tackifier. Due to the presence of acrylic, PVOH stabilized vinyl/acrylics are compatible with aqueous tackifiers. As a result, adhesion can be enhance by adding aqueous tackifier emulsions.

Table 22.1

| Adhesion of untreated polypropylene to paper: | | | | |
|---|---|---|---|---|
| | Sample 8 | | Comp. A | |
| | neat | w/Tack. | neat | w/Tack. |
| initial peel(p.l.i) | 0(zips) | paper tear | 0(zips) | 0(zips) |
| 24hr peel(p.l.i) | 0(zips) | 0.8(slt tear) | 0(zips) | 0(zips) |

Sample 8 of this invention exhibits enhanced adhesion through incorporation of tackifier. It is believed that there is an essential degree of compatibility between PVOH-stabilized vinyl ester/acrylic copolymers and aqueous dispersed tackifier resins, which contributes to enhanced adhesion properties. Comparative A is a commercial copolymer (Tg= 0 °C.) which is substantially composed of vinyl acetate/ethylene.

EXAMPLE 23. Effect of in-process chain transfer agent in vinyl ester/acrylic copolymer preparation on improved adhesion to plastic films and wax coatings.

Plastic Adhesion. Neat emulsion polymer was applied to oriented polypropylene (OPP) plastic film with a #18 wire wound rod. Greaseproof paper(Federal Base Stock from International Paper) was married to the coated film and the laminate was rolled with a 1.13 kg (2.5 lb.) rubber roller. The laminate was dried overnight at ambient temperature and bond strength was measured on 1 inch wide strips using an Instron tester at a rate of 25.4 cm/minute (10 inches/minute) in a T-peel configuration.

Wax coating Adhesion. A wax coating (Michelman Coating 40E) was applied to cardboard with a rubber squeegee (2 passes). The coated board was dried at 105 °C. for 1 minute. The board was cut into 5.1 cm by 5.1 cm (2 inch X 2 inch) coupons. A thin coat of adhesive was applied to the coated board with a aluminum bar notched with 0.16 cm (1/16") deep notches (to simulate a extrusion coated adhesive when applied).

The coated coupon was married to a coupon of virgin board and a 1 kg weight was applied for 4 minutes.

Ten coupons were peeled after 3 hours and percent fiber tear was determined.

Table 23.1

| Effect of chain transfer agent on adhesion to plastic films | | |
|---|---|---|
| Peel Strength (p.l.i.) | | |
| | OPP/greaseproof paper | PET/greaseproof paper |
| Sample 8 (no CTA) | 1.2 | 1.0 |
| Sample 12 (0.1 nDDM) | 1.5 | >2.0 |
| Sample 14 (0.1 MMP) | 2.2 | 2.2 |
| Sample 13 (0.5 nDDM) | 1.2 | 1.2 |
| Sample 15 (0.5 MMP) | 0.6 | 0.5 |

Table 23.2

| Effect of chain transfer agent (CTA) on adhesion to wax coating (Michelman Coating 40E) | |
|---|---|
| | (% Fiber Tear) |
| Sample 8 (no CTA) | 40 |
| Sample 12 (0.1 nDDM) | 70 |

Table 23.2   (continued)

| Effect of chain transfer agent (CTA) on adhesion to wax coating (Michelman Coating 40E) | |
|---|---|
| | (% Fiber Tear) |
| Sample 14 (0.1 MMP) | 80 |
| Sample 13 (0.5 nDDM) | 83 |
| Sample 15 (0.5 MMP) | 72 |

When 0.1% of n-DDM or MMP are aded to the polymer during the polymerization process (Samples 12-15 of this invention) peel adhesion increases significantly. When MMP was added at a concentration of 0.5%, adhesion to plastic films is decreased. However the improved adhesion to wax coatings (eg., Michem Coat 40E) is maintained at both 0.1 and 0.5% chain transfer agent.

EXAMPLE 24. Effect of addition of clay to vinyl ester/acrylic copolymer-containing composition on high temperature shear.

A thin bead of adhesive was applied to carton stock (printed clay-coated board from Westvaco) using a wooden applicator stick. The glue lap was folded such that the adhesive came in contact with the carton. A 4.5 kg (10 lb.) weight was placed on the carton for 1 minute. Initial fiber tear of laminate was determined after 1 minute. One inch strips were cut for use in the high temperature shear test. The high temperature shear test was begun after 24 hr RT dwell using two test specimens of 2.54 cm by 0.64 cm (1 in. X 1/4 in.) X 1 kg. Testing was carried out after 60°C (140 F) for 24 hrs, alternatively followed by 93°C (200 F) for 16 hours. The fiber tear of the laminate was tested.

Table 24.1

| Effect of clay addition on high temperature shear | | | | |
|---|---|---|---|---|
| | Shear(hours) | | Adhesion(% FT) | |
| Sample | 60°C (140 F) | 93°C (200 F) | initial | 24hr |
| 2 | >24 | 0.5,>16 | fair | fair+ |
| 3 | >24 | 0.5,0.5 | fair | good |
| 100pts 3 + 50pts VA[1] | >24 | 0.5,>16 | fair+ | fair |
| 4 | >24 | 0.5,0.5 | excel. | good |
| 100pts 4 + 50pts VA[1] | >24 | >16,>16 | fair | fair+ |
| 100pts 4 + 10pts clay[2] | >24 | >16 | good | excellent |

[[1] Vinyl acetate homopolymer, ROVACE 571 (Rohm & Haas co.) - 2 ASP-400 clay (Engelhard Corp.)]

Samples 3 and 4 of this invention may be hardened by the addition of vinyl acetate homopolymer to achieve the shear performance of the harder copolymer (sample 2) of this invention; however, adhesion is compromised. Incorporation of clay into the vinyl ester/acrylic adhesive composition contributes high temperature shear without adhesion loss.

EXAMPLE 25. Evaluation of adhesive performance of 2-ethylhexyl acrylate/vinyl acetate copolymers

Samples 9-11 were evaluated for adhesion to a wax coating (Michelman Coating 40E), oriented polypropylene (OPP), and polyester (Mylar) according to the methods of Example 19.

Table 25.1

| Adhesion to wax coating (Michelman Coating 40E) | | |
|---|---|---|
| | (% Fiber Tear) | |
| | 3 hour dwell | 24 hr dwell |
| Sample 9 | 88 | 63 |
| Sample 10 | 91 | 83 |
| Sample 11 | 82 | 95 |
| Comparative A | 14 | 11 |

Samples 9-11 of this invention, which contain 2-ethylhexyl acrylate and vinyl acetate, exhibit excellent adhesion to a wax coating. Comparative A is a commercial copolymer (Tg= 0 °C.) which is substantially composed of vinyl acetate/ethylene.

Table 25.2

| Adhesion to plastic films | | |
|---|---|---|
| | Adhesion | |
| | OPP(pli) | Mylar(pli) |
| Sample 9 | paper tear | 0.95 |
| Sample 10 | 0.81 | 1.1 |
| Sample 11 | paper tear | 1.1 |

Samples 9-11 of this invention, which contain 2-ethylhexyl acrylate and vinyl acetate, exhibit good adhesion to plastic films.

**Claims**

1.   A method of wet-laminating two substrates comprising

(a) forming an aqueous, organic solvent-free laminating adhesive composition comprising a vinyl ester/acrylic copolymer having a glass transition temperature from 10 °C. to -45 °C.;

(b) applying said composition to a first substrate;

(c) contacting said applied composition with a second substrate; and,

(d) after (c) drying said composition,

wherein said first substrate and/or second substrate is a difficult-to-adhere substrate selected from the group consisting of plastic films and wax coatings.

2.   A method as claimed in claim 1 wherein said vinyl ester/acrylic copolymer has a glass transition temperature from 10 °C. to -35 °C..

3.   A method as claimed in claim 2 wherein the glass transition temperature is from -15 °C. to -35 °C..

4.   A method as claimed in any preceding claim wherein said copolymer comprises a copolymerized acrylic monomer selected from the group consisting of n-butyl acrylate and 2-ethylhexyl acrylate, vinyl acetate and n-butyl acrylate, and 2-ethylhexyl acrylate and vinyl acetate.

**5.** A method as claimed in any preceding claim wherein said copolymer further comprises a stabilizer selected from the group consisting of hydroxyethyl cellulose and polyvinyl alcohol.

**6.** A method as claimed in any preceding claim wherein said copolymer is prepared with from 0.05% to 0.75% of a chain transfer agent.

**7.** A method as claimed in claim 6 wherein said chain transfer agent is selected from the group consisting of n-dodecyl mercaptan and methyl mercaptopropionate.

**8.** A method as claimed in any preceding claim wherein said composition further comprises at least 5% clay by weight, based on the weight of said copolymer.

**9.** A method as claimed in any preceding claim wherein said composition further comprises an aqueous tackifier.

**Patentansprüche**

**1.** Verfahren zum Naßlaminieren zweier Substrate, umfassend

(a) das Bilden einer wässerigen, von organischen Lösungsmitteln freien, adhäsiven Laminierungszusammensetzung, umfassend ein Vinylester/Acrylcopolymer, das eine Glasübergangstemperatur von 10°C bis -45°C aufweist,
(b) das Auftragen der Zusammensetzung auf ein erstes Substrat,
(c) das Kontaktieren der aufgetragenen Zusammensetzung mit einem zweiten Substrat und
(d) das Trocknen der Zusammensetzung nach (c),

wobei das erste Substrat und/oder das zweite Substrat ein schwer anhaftbares Substrat, ausgewählt aus der Gruppe, bestehend aus Plastikfilmen und Wachsbeschichtungen, ist.

**2.** Verfahren nach Anspruch 1, wobei das Vinylester/Acryl-copolymer eine Glasübergangstemperatur von 10°C bis -35°C aufweist.

**3.** Verfahren nach Anspruch 2, wobei die Glasübergangstemperatur -15 °C bis -35°C ist.

**4.** Verfahren nach einem der vorhergehenden Ansprüche, wobei das Copolymer ein copolymerisiertes Acrylmonomer, ausgewählt aus der Gruppe, bestehend aus n-Butylacrylat und 2-Ethylhexylacrylat, Vinylacetat und n-Butylacrylat und 2-Ethylhexylacrylat und Vinylacetat, umfaßt.

**5.** Verfahren nach einem der vorhergehenden Ansprüche, wobei das Copolymer weiter ein Stabilisierungsmittel, ausgewählt aus der Gruppe, bestehend aus Hydroxyethylcellulose und Polyvinylalkohol, umfaßt.

**6.** Verfahren nach einem der vorhergehenden Ansprüche, wobei das Copolymer mit 0,05% bis 0,75% eines Kettenübertragungsmittels hergestellt wird.

**7.** Verfahren nach Anspruch 6, wobei das Kettenübertragungsmittel aus der Gruppe, bestehend aus n-Dodecylmercaptan und Methylmercaptopropionat, ausgewählt ist.

**8.** Verfahren nach einem der vorhergehenden Ansprüche, wobei die Zusammensetzung weiter mindestens 5 Gew.-% Lehm umfaßt, basierend auf dem Gewicht des Copolymers.

**9.** Verfahren nach einem der vorhergehenden Ansprüche, wobei die Zusammensetzung weiter einen wässerigen Klebrigmacher umfaßt.

**Revendications**

**1.** Procédé pour stratifier au mouillé deux substrats comprenant les étapes consistant à:

(a) former une composition adhésive aqueuse de stratification, sans solvant organique, comprenant un copolymère ester vinylique/acrylique ayant une température de transition vitreuse de 10°C à -45°C;

(b) appliquer ladite composition sur un premier substrat;

(c) mettre en contact ladite composition, après application, avec un second substrat; et

(d) après (c), sécher ladite composition,

dans lequel ledit premier substrat et/ou second substrat est un substrat difficile à coller choisi dans le groupe constitué par les films de plastique et les revêtements de cire.

2. Procédé selon la revendication 1, dans lequel ledit copolymère ester vinylique/acrylique possède une température de transition vitreuse de 10°C à -35°C.

3. Procédé selon la revendication 2, dans lequel la température de transition vitreuse est de -15°C à -35°C.

4. Procédé selon l'une quelconque des revendications précédentes, dans lequel ledit copolymère comprend un monomère acrylique copolymérisé choisi dans le groupe constitué par l'acrylate de n-butyle et l'acrylate de 2-éthylhexyle, l'acétate de vinyle et l'acrylate de n-butyle, et l'acrylate de 2-éthylhexyle et l'acétate de vinyle.

5. Procédé selon l'une quelconque des revendications précédentes, dans lequel ledit copolymère comprend en outre un stabilisant choisi dans le groupe constitué par l'hydroxyéthylcellulose et le poly(alcool vinylique).

6. Procédé selon l'une quelconque des revendications précédentes, dans lequel ledit copolymère est préparé avec de 0,05% à 0,75% d'un agent de transfert de chaîne.

7. Procédé selon la revendication 6, dans lequel ledit agent de transfert de chaîne est choisi dans le groupe constitué par le n-dodécylmercaptan et le mercaptopropionate de méthyle.

8. Procédé selon l'une quelconque des revendications précédentes, dans lequel ladite composition comprend en outre au moins 5% d'argile, en poids rapporté au poids dudit copolymère.

9. Procédé selon l'une quelconque des revendications précédentes, dans lequel ladite composition comprend en outre un agent d'adhésivité aqueux.